# EUROPÄISCHE PATENTSCHRIFT

(11) **EP 1 254 949 B1**
(45) Veröffentlichungstag und Bekanntmachung des Hinweises auf die Patenterteilung: **28.07.2004**
(21) Anmeldenummer: 02009408.2
(22) Anmeldetag: 25.04.2002
(51) Int. Cl.: C11D 1/72, C07C 43/13

(54) **Geminitenside in Klarspülmitteln**
Gemini surfactants for rinse aids
Tensioactifs gemini pour les agents de rinçage

(30) Priorität: 04.05.2001 DE 10121722
(43) Veröffentlichungstag der Anmeldung: 06.11.2002
(73) Patentinhaber: Cognis Deutschland GmbH & Co. KG, 40589 Düsseldorf (DE)
(72) Erfinder: Raths, Hans-Christian, Dr., 40789 Monheim (DE); Weuthen, Manfred, Dr., 40764 Langenfeld (DE); Elsner, Michael, 42579 Heiligenhaus (DE)

(56) Entgegenhaltungen:
- EP-A- 0 300 305
- EP-A- 0 884 298
- WO-A-98/15346
- WO-A-99/27047
- DE-A- 19 513 391

## Beschreibung

### Gebiet der Erfindung

Die Erfindung betrifft Klarspülmittel, die Geminitenside enthalten, gegebenenfalls in Verbindung mit in Klarspülmittel üblichen Inhaltsstoffen, gegebenenfalls mit weiteren nichtionischen Tensiden und anionischen Tensiden, sowie die Verwendung der Geminitenside zur Verbesserung des Netzverhaltens in Klarspülmitteln.

### Stand der Technik

Mittel für das Spülen und Reinigen harter, nichttextiler Oberflächen, die im Haushalt und Gewerbesektor vorkommen sollen, die meist bei Anwendung ein geringfügiges Schaumvolumen entwickeln, das sich innerhalb von wenigen Minuten signifikant weiter verringert. Mittel dieser Art sind seit langem bekannt und im Markt etabliert. Es handelt sich dabei im wesentlichen um wässrige Tensidlösungen unterschiedlicher Art mit oder ohne Zusatz von Buildern, Lösungsvermittlern (Hydrotropen) oder Lösungsmitteln. Zum Nachweis der Wirksamkeit bei Beginn der Reinigungsarbeit wird vom Verbraucher zwar ein gewisses Schäumen der Anwendungslösung gewünscht, der Schaum soll jedoch rasch zusammenfallen, damit einmal gereinigte Flächen nicht nachgewischt werden müssen. Zu diesem Zweck werden Mittel der genannten Art üblicherweise mit schwach schäumenden nichtionischen Tensiden versetzt.
Besonders an maschinell gespültes Geschirr werden heute höhere Anforderungen gestellt als an manuell gespültes Geschirr. So wird auch ein von Speiseresten völlig gereinigtes Geschirr dann als nicht einwandfrei bewertet, wenn es nach dem maschinellen Geschirrspülen noch weißliche, auf Wasserhärte oder anderen mineralischen Salzen beruhende Flecken aufweist, die mangels Netzmittel aus eingetrockneten Wassertropfen stammen.
Um glanzklares und fleckenloses Geschirr zu erhalten, setzt man daher Klarspüler ein. Der Zusatz von flüssigem oder festem Klarspüler, der separat zugegeben werden kann oder bereits in gebrauchsfertiger Darreichungsform mit dem Reinigungsmittel und/oder Regeneriersalz zusammen ("2 in 1", "3 in 1", z.B. in Form von Tabs und Pulvern) vorliegt sorgt dafür, dass das Wasser möglichst vollständig vom Spülgut abläuft, sodass die unterschiedlichen Oberflächen am Ende des Spülprogramms rückstandsfrei und glänzend sind.
Marktübliche Klarspülmittel stellen Gemische z.B. aus nichtionischen Tensiden, Lösungsvermittlern, organischen Säuren und Lösungsmitteln, Wasser sowie ggf. Konservierungsmittel und Duftstoffe dar.

Die Aufgabe der Tenside in diesen Mitteln besteht darin, die Grenzflächenspannung des Wassers so zu beeinflussen, dass es in einem möglichst dünnen, zusammenhängenden Film vom Spülgut ablaufen kann, so dass beim anschließenden Trocknungsvorgang keine Wassertropfen, Streifen oder Filme zurückbleiben (sogenannte Netzwirkung).
Deswegen müssen Tenside in Klarspülem auch den durch Speisereste auftretenden Schaum in der Geschirrspülmaschine dämpfen. Da die Klarspüler meist Säuren für eine Verbesserung des Klartrockeneffekts enthalten, müssen die eingesetzten Tenside zusätzlich relativ hydrolyseunempfindlich gegenüber Säuren sein.
Klarspüler werden sowohl im Haushalt als auch in gewerblichen Bereichen eingesetzt. In Haushaltsgeschirrspülern wird der Klarspüler meist nach dem Vorspül- und Reinigungsgang bei knapp 40°C-65°C zudosiert. Die gewerblichen Geschirrspülmaschinen arbeiten mit nur einer Reinigungsflotte, die lediglich durch Zugabe der Klarspüllösung aus dem vorhergehenden Spülvorgang emeuert wird. Es findet also während des gesamten Spülprogramms kein vollständiger Wasseraustausch statt. Daher muss der Klarspüler auch schaumdämpfend wirken, temperaturstabil sein bei einem starken Temperaturgefälle von 85-35°C und außerdem ausreichend stabil gegen Alkali und Aktivchlor sein.

**Aufgabe** der vorliegenden Erfindung war Klarspülmittel bereitzustellen, die gleichzeitig ein gutes Schaum- und Reinigungsverhalten, insbesondere jedoch ein sehr gutes Ablaufverhalten, d.h. eine Verbesserung des Netzverhaltens an Kunststoffoberflächen zeigen.

Die **Aufgabe wurde gelöst,** indem ausgewählte Geminitenside eingesetzt werden.

### Beschreibung der Erfindung

Gegenstand der Erfindung sind Klarspülmittel, die Geminitenside der Formel (I) enthalten,

**R-CHOH-CH**_{**2**}**-O-[OCH**_{**2**}**CH**_{**2**}**]x-O-CH**_{**2**}**-CHOH-R (I)**

in der für R einen linearen oder verzweigten Alkyl- und/oder Alkenylrest mit 4 bis 22, vorzugsweise 8 bis 18, insbesondere 8 bis 12 Kohlenstoffatomen und x für 5 bis 90, vorzugsweise 10 bis 45 und insbesondere 12 bis 35 steht.

### Geminitenside

Allgemein werden Geminitenside durch Umsetzung von 1,2-Epoxyalkanen (CH₂CHO-R), wobei R für einen linearen oder verzweigten, gesättigten oder ungesättigten Alkyl- und/oder Alkenylrest steht, mit Polyolen hergestellt. (Diese Geminitenside sind Gegenstand der prioritätsgleichen **EP 1 254 948 A1.)**

Hierbei ist Polyol als die Sammelbezeichnung für mehrwertige Alkohole bzw. Polyalkylenglycole, d.h. als eine organische Verbindung, die mindestens zwei Hydroxy-Gruppen im Mol enthält, zu betrachten.
Unter den Polyalkylenglycolen sind auch Umsetzungsprodukte von mehrwertigen Alkoholen mit Alkoxylierungsreagenzien wie Ethylenoxid und Propylenoxid zu verstehen.

Aus dem Stand der Technik sind Hydroxyalkylpolyethylenglycolether bekannt, beispielsweise werden in der **EP 0 300 305 A2** Hydroxyalkylpolyethylenglycolether und deren Verwendung in Klarspülmitteln offenbart. Die in der EP 0 300 305 offenbarten Verbindungen enthalten allerdings nur eine Hydroxylfunktion im Molekül. In der **WO 99/27047 A1** werden Mittel zum Reinigen harter Oberflächen offenbart, wobei die Mittel neben nicht ionischen Tensiden auch Hydroxymischether enthalten. Die Hydroxymischether der WO 99/27047 können mehrere freie OH-Gruppen im Molekül aufweisen, wobei es sich bei diesem Produkten allerdings nicht um Geminitenside handelt. Die **DE 195 13 391 A1** beschreibt endgruppenverschlossene Dimeralkohol- und Trimeralkoholalkoxylate und deren Verwendung als Schaumhaarmeltenside. Die **EP 0 884 298 A2** betrifft ausgewählte Geminitenside deren Endgruppen mit Wasserstoffcarboxylatgruppen oder Sulfitgruppen enthalten. In der **WO 98/15346** werden Geminitenside offenbart die als Endgruppe Sulfitgruppen enthalten.

Im Sinne der Erfindung wird Polyethylenglycol **HO-[OCH**_{**2**}**CH**_{**2**}**]x-OH** als Polyol eingesetzt.

Besonders bevorzugt sind Geminitenside der Formel (I), wobei x für 10 bis 45, vorzugsweise für 12 bis 35 steht.
Ganz besonders bevorzugt sind Geminitenside der Formel (I), wobei R für einen linearen oder verzweigten Alkylrest mit 8 bis 12 Kohlenstoffatomen steht.
Weiterhin bevorzugt sind Geminitenside der Formel (I), wobei R für einen linearen Alkylrest mit 8 bis 12 Kohlenstoffatomen, insbesondere mit 10 Kohlenstoffatomen, steht.

In einer weiteren Ausführungsform sind Geminitenside der Formel (I) bevorzugt, die dadurch gekennzeichnet sind, dass sie mindestens 80 Gew.%, vorzugsweise 85 bis 100 Gew.%, insbesondere 95 bis 100 Gew.% Geminitenside enthalten, bei denen alle freien Hydroxygruppen des Polyethylenglycols mit 1,2-Epoxyalkan-Einheiten verschlossen sind.

Es werden Klarspülmittel beansprucht, die die erfindungsgemäßen Geminitenside sowie weitere, in Klarspülmittel übliche Inhaltsstoffe enthalten.
Diese üblichen Inhaltsstoffe können, wie nachfolgend beschrieben, Alkyl- und/oder Alkenyloligoglycoside, weitere nichtionische Tenside, anionische Tenside und weitere Hilfs- und Zusatzstoffe sein.

Ganz besonders bevorzugt sind hierbei Klarspülmittel, die Geminitenside der Formel (I) enthalten, in der x für 5 bis 90, vorzugsweise 10 bis 45, insbesondere 12 bis 35 und R für einen linearen oder verzweigten Alkyl- und/oder Alkenylrest mit 4 bis 22 Kohlenstoffatomen steht.

### Alkyl- und/oder Alkenyloligoglykoside

In einer weiteren Ausführungsform enthalten die erfindungsgemäßen Klarspülmittel Alkyl- und/oder Alkenyloligoglykoside der Formel (II).

**R**^{**1**}**O-[G]**_{**p**} **(II),** (II)

wobei R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, enthalten sind.

Sie können nach den einschlägigen Verfahren der präparativen organischen Chemie erhalten werden.
Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligo**glucoside**.
Der **Alkylrest** R¹ kann sich von primären **gesättigten Alkoholen** ableiten. Typische Beispiele sind Butanol-1, Capron-, Önanth-, Capryl-, Pelargon-, Caprinalkohol, Undecanol-1, Laurylalkohol, Tridecanol-1, Myristylalkohol, Pentadecanol-1, **Cetylalkohol**, Palmitylakohol, Heptadecanol-1, Stearylalkohol, Isostearylalkohol, Nonadecanol-1, Arachidylalkohol, Heneicosanol-1, und Behenylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden.
Der **Alkenylrest** R¹ kann sich von primären **ungesättigten Alkoholen** ableiten. Typische Beispiele **ungesättigter Alkohole** sind Undecen-1-ol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol, Palmoleylalkohol, Petroselinylalkohol, Arachylalkohol, sowie deren technische Gemische, die wie oben beschrieben erhalten werden können.

**Bevorzugt** werden Alkyl- bzw. Alkenylrest R¹, die sich von primären Alkoholen mit 6 bis 16 Kohlenstoffatomen ableiten.
**Insbesondere geeignet** sind Alkyloligoglucoside der Kettenlänge C₈-C₁₀, die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole.

Der Alkyl- bzw. Alkenylrest R¹ kann sich femer auch von primären Alkoholen mit 12 bis 14 Kohlenstoffatomen ableiten.

Die Indexzahl p in der allgemeinen Formel **(II)** gibt den Oligomerisierungsgrad (DP), d.h. die Verteilung von Mono- und Oligoglykosiden an und steht für eine Zahl zwischen 1 und 10. Während p in einer gegebenen Verbindung stets ganzzahlig sein muss und hier **insbesondere** die Werte p = 1 bis 3 annehmen kann, ist der Wert p für ein bestimmtes Alkyloligoglykosid eine analytisch ermittelte rechnerische Größe, die meistens eine gebrochene Zahl darstellt.
**Vorzugsweise** werden Alkyl- und/oder Alkenyloligoglykoside mit einem mittleren Oligomerisierungsgrad p von 1,1 bis 2,0 eingesetzt. Aus anwendungstechnischer Sicht sind solche Alkyl- und/oder Alkenyloligoglykoside **bevorzugt**, deren Oligomerisierungsgrad kleiner als 2,0 ist und insbesondere zwischen 1,2 und 1,7 liegt.

Bevorzugt werden Alkyl- und/oder Alkenyloligoglycoside der Formel (II) eingesetzt, wobei p für Zahlen von 1 bis 3 und R¹ für einen Alkylrest mit 6 bis 16 Kohlenstoffatomen steht.

In einer bevorzugten Ausführungsform enthalten die erfindungsgemäßen Klarspülmittel 0,01 bis 25 Gew.%, vorzugsweise 0,025 bis 20 Gew.% und insbesondere 0,1 bis 15 Gew.% Geminitenside der Formel (I) berechnet als Aktivsubstanz, bezogen auf die Mittel.
Aktivsubstanz definiert sich hier als die Masse an Tensid (gerechnet als Reinstoff zu 100%), die in dem Mittel enthalten sind.

In einer weiteren Ausführungsform enthalten die erfindungsgemäßen Klarspülmittel 0,01 bis 30 Gew.%, vorzugsweise 0,1 bis 20 Gew.% und insbesondere 0,2 bis 15 Gew.% Alkyl- und/oder Alkenyloligoglykoside der Formel (II) berechnet als Aktivsubstanz, bezogen auf die Mittel.

### Nichtionische Tenside

Die erfindugsgemäßen Klarspülmittel können weitere nichtionische Tenside enthalten. Typische Beispiele für **nichtionische Tenside** sind Alkoxylate von Alkanolen, endgruppenverschlossene Alkoxylate von Alkanolen ohne freie OH-Gruppen , alkoxylierte Fettsäureniedrigalkylester, Aminoxide, Alkylphenolpolyglycolether, Fettsäurepolyglycolester,Fettsäureamidpolyglycolether, Fettaminpolyglycolether, alkoxylierte Triglyceride, Mischether bzw. Mischformale, Fettsäure-N-alkylglucamide, Proteinhydrolysate (insbesondere pflanzliche Produkte auf Weizenbasis), Polyolfettsäureester, Zuckerester, Sorbitanester und Polysorbate. Sofern die nichtionischen Tenside Polyglycoletherketten enthalten, können diese eine konventionelle, vorzugsweise jedoch eine eingeengte Homologenverteilung aufweisen.
**Bevorzugt** sind die weiteren nichtionischen Tenside ausgewählt aus der Gruppe, die gebildet wird von **Alkoxylaten von Alkanolen,** insbesondere Fettalkoholpolyethylenglykol/polypropylenglykolether (FAEO/PO) der Formel (III) bzw. Fettalkoholpolypropylenglykollpolyethylenglykolether (FAPO/EO) der Formel (IV), **endgruppenverschlossene Alkoxylate von Alkanole,** insbesondere endgruppenverschlossene Fettalkoholpolyethylenglykollpolypropylenglykolether bzw. endgruppenverschlossene Fettalkoholpolypropylenglykol/polyethylenglykolether und **Fettsäureniedrigalkylester** und **Aminoxiden.**

### Fettalkoholpolyethylenglykol/polypropylenglykolether

In einer bevorzugten Ausführungsform werden Fettalkoholpoly**ethylenglykol**/poly**propylenglykol**ether der Formel (III), die gegebenenfalls endgruppenverschlossen sind,

R⁶O(CH₂CH₂O)ₙ₁[CH₂(CH₃)CHO]ₘR⁷ (III)

eingesetzt, in der R⁶ für einen Alkyl- und/oder Alkenylrest mit 8 bis 22 C-Atomen, R⁷ für H oder einen Alkylrest mit 1 bis 8 C-Atomen, n1 für eine Zahl von 1 bis 40, **vorzugsweise** 1 bis 30, **insbesondere** 1 bis 15, und m für 0 oder eine Zahl von 1 bis 10 steht.

### Fettalkoholpolypropylenglykol/polyethylenglykolether

Ebenso geeignet sind Fettalkoholpoly**propylenglykol**/poly**ethylenglykol**ether der Formel (IV), die gegebenenfalls endgruppenverschlossen sind,

R⁸O[CH₂(CH₃)CHO]_{q}(CH₂CH₂O)ᵣR⁹ (IV)

in der R⁶ für einen Alkyl- und/oder Alkenylrest mit 8 bis 22 C-Atomen, R⁹ für H oder einen Alkylrest mit 1 bis 8 C-Atomen, q für eine Zahl von 1 bis 5 und r für eine Zahl von 0 bis 15 steht.

**Einer bevorzugten Ausführungsform** entsprechend enthalten die erfindungsgemäßen Klarspülmittel Fettalkoholpolyethylenglykol/polypropylenglykolether der Formel (III), in der R⁶ für einen aliphatischen, gesättigten, geradkettigen oder verzweigten Alkylrest mit 8 bis 16 C-Atomen, n1 für eine Zahl von 1 bis 10, und m für 0 und R⁷ für Wasserstoff steht. Es handelt sich hierbei um Anlagerungsprodukte von 1 bis 10 Mol Ethylenoxid an monofunktionelle Alkohole. Als Alkohole sind die oben beschriebenen Alkohole wie Fettalkohole, Oxoalkohole und Guerbetalkohole geeignet.
**Auch geeignet** sind von solchen Alkoholethoxylaten solche, die eine eingeengte Homologenverteilung aufweisen.
**Weitere geeignete** Vertreter von nichtendgruppenverschlossenen Vertretern sind solche der Formel (III), in der R⁶ für einen aliphatischen, gesättigten, geradkettigen oder verzweigten Alkylrest mit 8 bis 16 C-Atomen, n1 für eine Zahl von 2 bis 7, m für eine Zahl von 3 bis 7 und R⁷ für Wasserstoff steht. Es handelt sich hierbei um Anlagerungsprodukte von zunächst mit 2 bis 7 Mol Ethylenoxid und dann mit 3 bis 7 Mol Propylenoxid alkoxylierten monofunktionellen Alkohole der schon beschriebenen Art.

Die endgruppenverschlossenen Verbindungen der Formel (III) sind mit einer Alkylgruppe mit 1 bis 8 C-Atomen verschlossen (R⁷). Häufig werden derartige Verbindungen in der Literatur auch als Mischether bezeichnet. Geeignete Vertreter sind methylgruppenverschlossene Verbindungen der Formel (III), in denen R⁶ für einen aliphatischen, gesättigten, geradkettigen oder verzweigten Alkylrest mit 8 bis 16 C-Atomen, n1 für eine Zahl von 2 bis 7, m für eine Zahl von 3 bis 7 und R⁷ für eine Methylgruppe steht. Derartige Verbindungen können leicht durch Umsetzung der entsprechenden nicht endgruppenverschlossenen Fettalkoholpolyethylenglykol/polypropylenglykolether mit Methylchlorid in Gegenwart einer Base hergestellt werden.

Geeignete Vertreter von alkylgruppenverschlossenen Verbindungen sind solche der Formel (III), in denen R⁶ für einen aliphatischen, gesättigten, geradkettigen oder verzweigten Alkylrest mit 8 bis 16 C-Atomen, n1 für eine Zahl von 5 bis 15, m für 0 und R⁷ für eine Alkylgruppe mit 4 bis 8 C-Atomen steht. Bevorzugt wird der Endgruppenverschluß mit einer geradkettigen oder verzweigten **Butylgruppe** durchgeführt, indem der entsprechende Fettalkoholpolyethylenglykolether mit n-Butylchlorid oder mit tert. Butylchlorid in Gegenwart von Basen umgesetzt wird.

Anstelle der Verbindungen der Formel (III) oder in Mischung mit ihnen können gegebenenfalls endgruppenverschlossene Fettalkoholpolypropylenglykol/polyethylenglykolether der Formel (IV) enthalten sein. Derartige Verbindungen werden beispielsweise in der deutschen Offenlegungsschrift DE-A1- 43 23 252 beschrieben. Besonders bevorzugte Vertreter der Verbindungen der Formel (IV) sind solche, in denen R⁸ für einen aliphatischen, gesättigten, geradkettigen oder verzweigten Alkylrest mit 8 bis 16 C-Atomen, q für eine Zahl von 1 bis 5, r für eine Zahl von 1 bis 6 und R⁹ für Wasserstoff steht. Es handelt sich hierbei vorzugsweise um Anlagerungsprodukte von 1 bis 5 Mol Propylenoxid und von 1 bis 6 Mol Ethylenoxid an monofunktionelle Alkohole, die bereits im Zusammenhang mit den Geminitensiden als geeignet beschrieben worden sind.

### Alkoxylierte Fettsäureniedrigalkylester

Als **alkoxylierte Fettsäureniedrigalkylester** kommen Tenside der Formel **(V)** in Betracht,

**R**^{**10**}**CO-(OCH**_{**2**}**CHR**^{**11**}**)**_{**w**}**OR**^{**12**} **(V)**

in der R¹⁰CO für einen linearen oder verzweigten, gesättigten und/oder ungesättigten Acylrest mit 6 bis 22 Kohlenstoffatomen, R¹¹ für Wasserstoff oder Methyl, R¹² für lineare oder verzweigte Alkylreste mit 1 bis 4 Kohlenstoffatomen und w für Zahlen von 1 bis 20 steht. Typische Beispiele sind die formalen Einschubprodukte von durchschnittlich 1 bis 20 und vorzugsweise 5 bis 10 Mol Ethylen- und/oder Propylenoxid in die Methyl-, Ethyl-, Propyl-, Isopropyl-, Butyl- und tert.-Butylester von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Üblicherweise erfolgt die Herstellung der Produkte durch Insertion der Alkylenoxide in die Carbonylesterbindung in Gegenwart spezieller Katalysatoren, wie z.B. calcinierter Hydrotalcit. Besonders bevorzugt sind Umsetzungsprodukte von durchschnittlich 5 bis 10 Mol Ethylenoxid in die Esterbindung von technischen Kokosfettsäuremethylestem.

### Aminoxide

Als **Aminoxide** können Verbindungen der Formel **(VI)** und/oder eingesetzt werden.

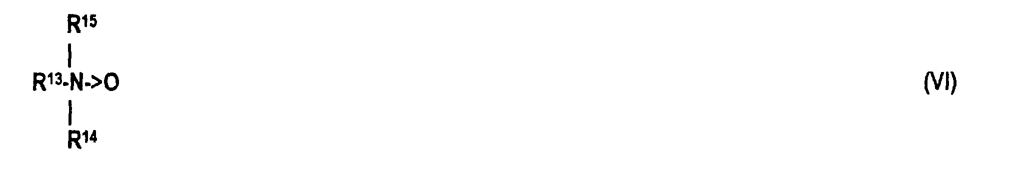

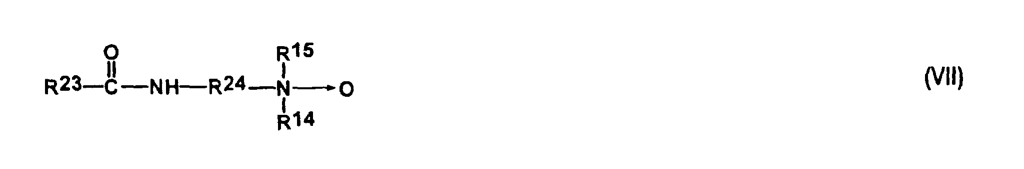

Bei der Herstellung der Aminoxide der Formel **(VI)** geht man von tertiären Fettaminen aus, die mindestens einen langen Alkylrest aufweisen, und oxidiert sie in Gegenwart von Wasserstoffperoxid. Bei den im Sinne der Erfindung in Betracht kommenden Aminoxiden der Formel **(VI)** steht R¹³ für einen linearen oder verzweigten Alkylrest mit 6 bis 22, vorzugsweise 12 bis 18 Kohlenstoffatomen, sowie R¹⁴ und R¹⁵ unabhängig voneinander für R¹³ oder einen gegebenenfalls hydroxysubstituierten Alkylrest mit 1 bis 4 Kohlenstoffatomen. Vorzugsweise werden Aminoxide der Formel **(VI)** eingesetzt, in der R¹³ und R¹⁴ für C_{12/14}- bzw. C_{12/18}-Kokosalkylreste stehen und R¹⁵ einen Methyl- oder einen Hydroxyethylrest bedeutet. Ebenfalls bevorzugt sind Aminoxide der Formel **(VI),** in denen R¹³ für einen C_{12/14}- bzw. C_{12/18}- Kokosalkylrest steht und R¹⁴ und R¹⁵ die Bedeutung eines Methyl- oder Hydroxyethylrestes haben.
Weitere geeignete Aminoxide sind **Alkylamido**-aminoxide der Formel **(VII)**, wobei der Alkylamido-Rest R²³CONH durch die Reaktion von linearen oder verzweigten Carbonsäuren, vorzugsweise mit 6 bis 22, bevorzugt mit 12 bis 18 Kohlenstoffatomen, insbesondere aus C_{12/14}- bzw. C_{12/18}- Fettsäuren mit Aminen entsteht. Dabei stellt R²⁴ eine linerare oder verzweigte Alkylengruppe dar mit 2 bis 6, vorzugsweise 2 bis 4 Kohlenstoffatomen und R¹⁴ und R¹⁵ haben die in Formel **(VI)** angegebene Bedeutung.

Die **weiteren nichtionischen Tenside** können in den erfindungsgemäßen Klarspülmitteln in Mengen von 0,1 bis 15 Gew.%, vorzugsweise 0,5 bis 10 Gew.%, insbesondere 1 bis 8 Gew.% enthalten sein, berechnet als Aktivsubstanz, bezogen auf die Mittel.

Gemäß der vorliegenden Erfindung können die erfindungsgemäßen Klarspülmittel **anionische Tenside** enthalten.

### Anionische Tenside

Typische Beispiele für **anionische Tenside** sind Seifen, **Alkylbenzolsulfonate,** sekundäre Alkansulfonate, Olefinsulfonate, Alkylethersulfonate, Glycerinethersulfonate, α-Methylestersulfonate, Sulfofettsäuren, **Alkyl- und/oder Alkenylsulfate, Alkylethersulfate,** Glycerinethersulfate, Hydroxymischethersulfate, **Monoglycerid(ether)sulfate,** Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen.

**Vorzugsweise** sind die **anionischen Tenside** ausgewählt aus der Gruppe, die gebildet wird von Alkylund/oder Alkenylsulfate, Alkylethersulfate, Alkylbenzolsulfonate, Monoglycerid(ether)sulfate und Alkansulfonate, insbesondere Fettalkoholsulfate, Fettalkoholethersulfate, sekundäre Alkansulfonate und lineare Alkylbenzolsulfonate.

### Alkyl- und/oder Alkenylsulfate

Unter Alkyl- und/oder Alkenylsulfaten, die auch häufig als Fettalkoholsulfate bezeichnet werden, sind die Sulfatierungsprodukte primärer Alkohole zu verstehen, die der Formel **(VIII)** folgen,

**R**^{**16**}**O-SO**_{**3**}**X (VIII)**

in der R¹⁶ für einen linearen oder verzweigten, aliphatischen Alkyl- und/oder Alkenylrest mit 6 bis 22, vorzugsweise 12 bis 18 Kohlenstoffatomen und X für ein Alkali- und/oder Erdalkalimetall, Ammonium, Alkylammonium, Alkanolammonium oder Glucammonium steht. Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelenschen Oxosynthese erhalten werden. Die Sulfatierungsprodukte können vorzugsweise in Form ihrer Alkalisalze und insbesondere ihrer Natriumsalze eingesetzt werden. Besonders bevorzugt sind Alkylsulfate auf Basis von C_{16/18}-Talgfettalkoholen bzw. pflanzliche Fettalkohole vergleichbarer C-Kettenverteilung in Form ihrer Natriumsalze.

### Alkylethersulfate

Alkylethersulfate ("Ethersulfate") stellen bekannte anionische Tenside dar, die großtechnisch durch SO₃- oder Chlorsulfonsäure (CSA)-Sulfatierung von Fettalkohol- oder Oxoalkoholpolyglycolethern und nachfolgende Neutralisation hergestellt werden.

Im Sinne der Erfindung kommen Ethersulfate in Betracht, die der Formel (IX) folgen,

**R**^{**17**}**O-(CH**_{**2**}**CH**_{**2**}**O)**_{**a**}**SO**_{**3**}**X (IX)**

in der R¹⁷ für einen linearen oder verzweigten Alkyl- und/oder Alkenylrest mit 6 bis 22 Kohlenstoffatomen, a für Zahlen von 1 bis 10 und X für ein Alkali- und/oder Erdalkalimetall, Ammonium, Alkylammonium, Alkanolammonium oder Glucammonium steht. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen in Form ihrer Natrium- und/oder Magnesiumsalze. Die Ethersulfate können dabei sowohl eine konventionelle als auch eine eingeengte Homologenverteilung aufweisen. Besonders bevorzugt ist der Einsatz von Ethersulfaten auf Basis von Addukten von durchschnittlich 2 bis 3 Mol Ethylenoxid an technische C_{12/14}- bzw. C_{12/18}- Kokosfettalkoholfraktionen in Form ihrer Natrium- und/oder Magnesiumsalze.

### Alkylbenzolsulfonate

Alkylbenzolsulfonate folgen vorzugsweise der Formel (X),

**R**^{**18**}**-Ph-SO**_{**3**}**X (X)**

in der R¹⁸ für einen verzweigten, vorzugsweise jedoch linearen Alkylrest mit 10 bis 18 Kohlenstoffatomen, Ph für einen Phenylrest und X für ein Alkali- und/oder Erdalkalimetall, Ammonium, Alkylammonium, Alkanolammonium oder Glucammonium steht. Vorzugsweise werden Dodecylbenzolsulfonate, Tetradecylbenzolsulfonate, Hexadecylbenzolsulfonate sowie deren technische Gemische in Form der Natriumsalze eingesetzt.

### Monoglycerid(ether)sulfate

Monoglyceridsulfate und Monoglyceridethersulfate stellen bekannte anionische Tenside dar, die nach den einschlägigen Methoden der präparativen organischen Chemie erhalten werden können. Üblicherweise geht man zu ihrer Herstellung von Triglyceriden aus, die gegebenenfalls nach Ethoxylierung zu den Monoglyceriden umgeestert und nachfolgend sulfatiert und neutralisiert werden. Gleichfalls ist es möglich, die Partialglyceride mit geeigneten Sulfatierungsmitteln, vorzugsweise gasförmiges Schwefeltrioxid oder Chlorsulfonsäure umzusetzen [vgl. **EP 0561825 B1, EP 0561999 B1** (Henkel)]. Die neutralisierten Stoffe können - falls gewünscht - einer Ultrafiltration unterworfen werden, um den Elektrolytgehalt auf ein gewünschtes Maß zu vermindern **[DE 4204700 A1** (Henkel)]. Übersichten zur Chemie der Monoglyceridsulfate sind beispielsweise von A. K. Biswas et al. in **J.Am.Oil.Chem.Soc. 37, 171 (1960)** und F. U. Ahmed **J.Am.Oil.Chem.Soc. 67, 8 (1990)** erschienen. Die im Sinne der Erfindung einzusetzenden **Monoglycerid(ether)sulfate** folgen der Formel **(XI),** 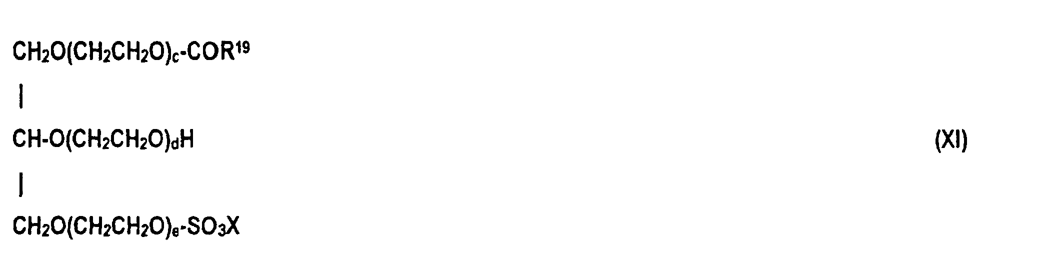 in der R¹⁹CO für einen linearen oder verzweigten Acylrest mit 6 bis 22 Kohlenstoffatomen, c, d und e in Summe für 0 oder für Zahlen von 1 bis 30, vorzugsweise 2 bis 10, und X für ein Alkali- oder Erdalkalimetall steht. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze. Vorzugsweise werden Monoglyceridsulfate der Formel **(XI)** eingesetzt, in der R¹⁹CO für einen linearen Acylrest mit 8 bis 18 Kohlenstoffatomen steht.

### Alkansulfonate

Unter Alkansulfonate versteht man Verbindungen der Formel **(XII)**. 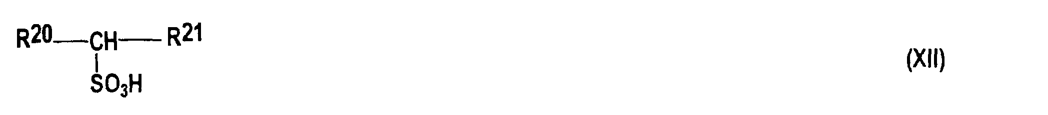 R²⁰ und R²¹ stehen für Alkylreste, wobei R²⁰ und R²¹ zusammen nicht mehr als 50 Kohlenstoffatome haben sollen.

Ebenso können die Klarspülmittel 0,01 bis 20 Gew.%, vorzugsweise 0,25 bis 15 Gew.%, insbesondere 0,4 bis 10 Gew.% **anionische Tenside** enthalten, berechnet als Aktivsubstanz, bezogen auf die Mittel. Den zu 100 Gew.% fehlenden Rest können Hilfs- und Zusatzstoffe sowie Wasser darstellen.

### Hilf- und Zusatzstoffe

Die erfindungsgemäßen Klarspülmittel können als übliche Inhaltstsstoffe bzw. Hilfs- und Zusatzstoffe beispielsweise **Lösungsvermittler** wie Cumolsulfonat, Ethanol, Isopropylalkohol, Ethylenglycol, Propylenglycol, Butylglycol, Diethylenglycol, Propylenglycolmonobutylether, Polyethylen- bzw. polypropylenglycolether mit Molmassen von 600 bis 1 500 000, vorzugsweise mit einer Molmasse von 400 000 bis 800 000, oder insbesondere Butyldiglycol enthalten. Weiterhin können organische Säuren, wie ein- und/ oder mehrwertige Carbonsäuren, bevorzugt Citronensäure, sowie Konservierungsmittel und Duftstoffe eingesetzt werden.

Weiterhin bevorzugt ist die Verwendung von Geminitensiden der Formel (**I**) in Klarspülmitteln vorzugsweise im Haushalt und im industriellen- und institutionellen Bereich zum Spülen und Reinigen von harten Oberflächen. Harte Oberflächen sind u.a. Keramikflächen, Metallflächen, lackierte Flächen, Kunststoffoberflächen und Oberflächen aus Glas, Stein, Beton, Porzellan und Holz.

Ein weiterer Gegenstand der Erfindung ist die Verwendung der erfindungsgemäßen Geminitenside der Formel (I) zur Verbesserung des Netzverhaltens in Klarspülmitteln, vorzugsweise auf harten Oberflächen, insbesondere in kombinierten Produkten aus maschinellen Geschirr-Reinigern und Klarspüler.

Im Gegensatz zu den bisher bekannten Hydroxymischethern zeichnen sich die erfindungsgemäßen Geminitenside, neben ihrer schaumdämpfenden Wirkung und der hohen Verträglichkeit, insbesondere gegenüber Kunststoff, durch ihre höheren Schmelzpunkte aus. Dadurch sind sie besonders zur vereinfachten Herstellung von festen Formulierungen geeignet. Ebenso lösen sich die Geminitenside, durch ihre höheren Schmelzpunkte, später in der Reinungsflotte auf und entfalten zeitversetzt, und in höherer Konzentration ihre Wirkung. Dieser Effekt kann besonders vorteilhaft in festen Kombinationsprodukten aus Reiniger und Klarspüler genutzt werden.

Die Klarspülmittel können sowohl als wässrige Lösungen, als auch in fester Form z.B. in Wachs eingegossen oder als Gel vorliegen. Insbesondere bevorzugt sind wässrige Klarspülmittel, die mindestens 50 Gew.% - bezogen auf das Mittel - Wasser enthalten.

Bevorzugt weiterhin ist die Verwendung von Geminitensiden der Formel (I) in Kombination mit Alkyl- und/oder Alkenyloligoglykosiden in Klarspülern.

### Beispiele

### Screening - Methode zur Bewertung der Benetzungseigenschaften von Tensid - Lösungen gegenüber Kunststoffmaterialien

Die Benetzungseigenschaften von Tensidlösungen gegenüber Kunststoffen wurden in einem vereinfachten Screening in Anlehnung an die Bedingungen / Testparameter in einer handelsüblichen Geschirrspülmaschine, jedoch ohne die Verwendung einer solchen, bestimmt.

Zur Bewertung der Benetzungseigenschaften werden Kunststoff - Prüfkörper der Abmessung 20 x 5 cm zuerst mit 1%iger NaOH und dann mit iso - Propanol gereinigt. Die so vorbehandelten Prüfkörper werden dann in die zu prüfende Lösung getaucht und direkt wieder entfernt. Die Bewertung erfolgt visuell durch Aufstellung einer Rangliste bzw. nach einer Notenscala von 1 - 5. Dabei bedeutet 5, daß spontanes Aufreißen des Flüssigkeitsfilms auftritt und die Benetzung vollständig aufgehoben wird. Note 5 wird bei Verwendung von Wasser erhalten. Die Note 1 bedeutet vollständige Benetzung der Kunststoffoberfläche bei einem gleichmäßigem Ablauf des Flüssigkeitsfilms.

### Testparameter:

| | |
|---|---|
| Wasserhärte | 2°d |
| Salzfracht | 700ppm |
| Temperatur | 60°C |
| Tensidkonzentration | 0,1% |

### Prüfkörper:

### PP (Polypropylen); PE (Polyethylen); PC (Polycarbonat);

In Tabelle 1 sind die Versuchsergebnisse dargestellt, wobei V1 bis V2 Vergleichsversuche und I, II und III die erfindungsgemäßen Beispiele wiedergeben.

**Tabelle 1:**

| **Benetzungseigenschaften an Kunststoffen** | | | | | |
|---|---|---|---|---|---|
| **Zusammensetzung in % Aktivsubstanz** | **V1** | **V2** | **I** | **II** | **III** |
| 2-Hydroxydodecylether-PEG 600-2-Hydroxydodecylether¹ | - | - | - | - | 0,1 |
| 2-Hydroxydodecylether-PEG 1000-2-Hydroxydodecylether² | - | - | - | 0,1 | - |
| 2-Hydroxydodecylether-PEG 1500-2-Hydroxydodecylether³ | - | - | 0,1 | | - |
| | | | | | |
| Poly Tergent SLF-18B-45^{*} | - | 0,1 | | - | |
| | | | | | |
| Wasser, 2°d/700ppm NaCI | 100 | 99,9 | 99,9 | 99,9 | 99,9 |
| Benetzungseigenschaften an Kunststoffen | | | | | |
| Temperatur: 60°C/Kunststoff "PP" | 5 | 4 | 2 | 1 | 3 |
| Temperatur: 60°C/Kunststoff "PE" | 5 | 3 | 2 | 1 | 4 |
| Temperatur: 60°C/Kunststoff "PC" | 5 | 4 | 2 | 1 | 3 |

| | | | | | |
|---|---|---|---|---|---|
| *: Alkoholalkoxylat der Firma Olin Chemicals mit 1 PO und 22 EO, | | | | | |
| 1: Geminitensid mit durchschnittlich 13 [OCH₂CH₂]-Einheiten | | | | | |
| 2: Geminitensid mit durchschnittlich 22 [OCH₂CH₂]-Einheiten | | | | | |
| 3: Geminitensid mit durchschnittlich 34 [OCH₂CH₂]-Einheiten | | | | | |

### Klarspülvermögen

Die Beurteilung des Klarspülvermögens erfolgt visuell durch Testpersonen. Dabei werden Gläser, Besteck, Kunststoff- sowie Porzellanteller unter definierten Bedingungen in einer Haushaltsgeschirrspülmaschine gespült. Danach wird das Spülgut unter definierten Lichtverhältnissen beurteilt (Beurteilung von Flecken und Belägen). Die Angabe der Ergebnisse erfolgt als "deutlich besser / besser gleich / schlechter als Standard". Der Standard wird für jede Testreihe neu definiert.

In Tabelle 2 sind die Versuchsergebnisse dargestellt, wobei V1 und V2 Vergleichsversuche (=Standard) und I bis V die erfindungsgemäßen Beispiele wiedergeben.

**Tabelle 2:**

| **Klarspülvermögen** | | | | | | | |
|---|---|---|---|---|---|---|---|
| **Zusammensetzung in % Aktivsubstanz** | **V1** | **V2** | **I** | **II** | **III** | **IV** | **V** |
| 2-Hydroxydodecylether-PEG 600-2-Hydroxydodecylether¹ | | | 15,0 | | | | |
| 2-Hydroxydodecylether-PEG 1000-2-Hydroxydodecylether² | | | | 15,0 | | 3,0 | |
| 2-Hydroxydodecylether-PEG 1500-2-Hydroxydodecylether³ | | | | | 15,0 | | 3,0 |
| C 12/14 FA +5EO+4PO⁴ | | 12,0 | | | | 12,0 | 12,0 |
| Poly Tergent SLF-18B-45* | 15,0 | 3,0 | | | | | |
| Na-Cumolsulfonat | 3,5 | 3,0 | 4,0 | 4,0 | 4,0 | 3,0 | 3,0 |
| Citronensäure | 5,0 | 5,0 | 5,0 | 5,0 | 5,0 | 5,0 | 5,0 |
| Wasser | ad 100 | | | | | | |
| Klarspülvermögen | | | | | | | |
| ++ = deutlich besser / + = besser als Standard / o = wie Standard / | | | | | | | |
| = schlechter als Standard | | | | | | | |
| Besteck | **o** | **o** | **o** | **+** | **o** | **+** | **o** |
| Porzellan | **o** | **o** | **o** | **+** | **o** | **+** | **o** |
| Kunststoff | **o** | **o** | **+** | **++** | **+** | **++** | **+** |

| | | | | | | | |
|---|---|---|---|---|---|---|---|
| *: Alkoholalkoxylat der Firma Olin Chemicals mit 1 PO und 22 EO | | | | | | | |
| 1: Geminitensid mit durchschnittlich 13 [OCH₂CH₂]-Einheiten | | | | | | | |
| 2: Geminitensid mit durchschnittlich 22 [OCH₂CH₂]-Einheiten | | | | | | | |
| 3: Geminitensid mit durchschnittlich 34 [OCH₂CH₂]-Einheiten | | | | | | | |
| 4: C12/14-Fettalkoholpolyglycolether mit 5 EO und 4 PO | | | | | | | |

Der Tabelle 2 ist deutlich zu entnehmen, dass die erfindungsgemäßen Klarspülmittel weitaus besser als die Vergleichs-Klarspülmittel (V1 und V2) sind. Dies zeigt sich besonders am Klarspülvermögen von Kunststoffoberflächen .

## Patentansprüche

1. Klarspülmittel, enthaltend Geminitenside der Formel (I)
**R-CHOH-CH**_{**2**}**-[OCH**_{**2**}**CH**_{**2**}**]x-O-CH**_{**2**}**-CHOH-R**
in der R für einen linearen oder verzweigten Alkyl- und/oder Alkenylrest mit 4 bis 22 Kohlenstoffatomen und x für 5 bis 90 steht, sowie weitere in Klarspülmitteln übliche Inhaltsstoffe.

2. Mittel nach Anspruch 1, wobei in der Formel I x für 10 bis 45, vorzugsweise 12 bis 35 steht.

3. Mittel nach Anspruch 1 und/oder 2, wobei in der Formel I R für einen linearen oder verzweigten Alkylrest mit 8 bis 12 Kohlenstoffatomen steht.

4. Mittel nach einem der Ansprüche 1 bis 3, wobei in der Formel I R für einen linearen Alkylrest mit 8 bis 12 Kohlenstoffatomen steht

5. Mittel nach einem der Ansprüche 1 bis 4, **dadurch gekennzeichnet, dass** sie mindestens 80 Gew.% Geminitenside enthalten, bei denen alle freien Hydroxygruppen des Polyethylenglycols mit 1,2-Epoxyalkanen verschlossen sind.

6. Klarspülmittel nach den Ansprüchen 1 bis 5, **dadurch gekennzeichnet, dass** sie Geminitenside der Formel (I) enthalten, in der x für 5 bis 90, vorzugsweise 10 bis 45, insbesondere 12 bis 35, R für einen linearen oder verzweigten Alkyl- und/oder Alkenylrest mit 4 bis 22 Kohlenstoffatomen steht.

7. Klarspülmittel nach einem der Ansprüche 1 bis 6, **dadurch gekennzeichnet, dass** sie Alkyl- und/oder Alkenyloligoglykoside der Formel (II) enthalten.
**R**^{**1**}**O-[G]**_{**p**} **(II)**
wobei R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, enthalten sind.

8. Klarspülmittel nach einem der Ansprüche 1 bis 7 **dadurch gekennzeichnet, dass** sie - berechnet als Aktivsubstanz, bezogen auf die Mittel - 0,01 bis 25 Gew.% Geminitenside der Formel (I) enthalten.

9. Klarspülmittel nach einem der Ansprüche 1 bis 8, **dadurch gekennzeichnet, dass** sie - berechnet als Aktivsubstanz, bezogen auf die Mittel - 0,01 bis 30 Gew.% Alkyl- und/oder Alkenyloligoglykoside der Formel (II) enthalten.

10. Klarspülmittel nach einem der Ansprüche 1 bis 9, **dadurch gekennzeichnet, dass** sie **weitere nicht**ionische Tenside enthalten, vorzugsweise ausgewählt aus der Gruppe, die gebildet wird von Alkoxylaten von Alkanolen, endgruppenverschlossenen Alkoxylaten von Alkanolen, alkoxylierten Fettsäureniedrigalkylestern und Aminoxiden.

11. Klarspülmittel nach Anspruch 10, **dadurch gekennzeichnet, dass** sie - berechnet als Aktivsubstanz, bezogen auf die Mittel - 0,1 bis 15 Gew.% weitere nichtionische Tenside enthalten.

12. Klarspülmittel nach einem der Ansprüche 1 bis 11, **dadurch gekennzeichnet, dass** sie als weitere Komponente anionische Tenside enthalten, vorzugsweise ausgewählt aus der Gruppe, die gebildet wird von Alkyl- und/oder Alkenylsulfaten, Alkylethersulfate, Alkylbenzolsulfonate, Monoglycerid-(ether)sulfate und Alkansulfonate.

13. Klarspülmittel nach Anspruch 12, **dadurch gekennzeichnet, dass** sie - berechnet als Aktivsubstanz, bezogen auf die Mittel - 0,01 bis 20 Gew.% **anionische Tenside** enthalten.

14. Klarspülmittel nach einem der Ansprüche 1 bis 13, **dadurch gekennzeichnet, dass** sie mindestens 50 Gew.% - bezogen auf das Mittel - Wasser enthalten.

15. Verwendung von Geminitensiden gemäß Formel (I) in Anspruch 1, zur Verbesserung des Netzverhaltens in Klarspülmitteln.

## Claims

1. A rinse agent containing gemini surfactants corresponding to formula **(I)**:
**R-CHOH-CH**_{**2**}**-[OCH**_{**2**}**CH**_{**2**}**]x-O-CH**_{**2**}**-CHOH-R (I)**
in which R is a linear or branched alkyl and/or alkenyl group containing 4 to 22 carbon atoms and x has a value of 5 to 90, and other ingredients typical of rinse agents,

2. A rinse agent as claimed in claim 1, **characterized in that**, in formula (I), x has a value of 10 to 45 and preferably 12 to 35.

3. A rinse agent as claimed in claim 1 and/or 2, **characterized in that**, in formula (I), R is a linear or branched alkyl group containing 8 to 12 carbon atoms.

4. A rinse agent as claimed in any of claims 1 to 3, **characterized in that**, in formula (I), R is a linear alkyl group containing 8 to 12 carbon atoms.

5. A rinse agent as claimed in any of claims 1 to 4, **characterized in that** it contains at least 80% by weight of gemini surfactants in which all the free hydroxy groups of the polyethylene glycol are capped by 1,2-epoxyalkanes.

6. A rinse agent as claimed in claims 1 to 5, **characterized in that** it contains gemini surfactants corresponding to formula (I) in which x has a value of 5 to 90, preferably 10 to 45 and more particularly 12 to 35, R is linear or branched alkyl and/or alkenyl group containing 4 to 22 carbon atoms.

7. A rinse agent as claimed in any of claims 1 to 6, **characterized in that** it contains alkyl and/or alkenyl oligoglycosides corresponding to formula (II):
**R**^{**1**}**O-[G]**_{**p**} **(II)**
in which R¹ is an alkyl and/or alkenyl group containing 4 to 22 carbon atoms, G is a sugar unit containing 5 or 6 carbon atoms and p is a number of 1 to 10.

8. A rinse agent as claimed in any of claims 1 to 7, **characterized in that** it contains 0.01 to 25% by weight of gemini surfactants of formula (I), expressed as active substance and based on the rinse aid.

9. A rinse agent as claimed in any of claims 1 to 8, **characterized in that** it contains 0.01 to 30% by weight of alkyl and/or alkenyl oligoglycosides of formula (I), expressed as active substance and based on the rinse aid.

10. A rinse agent as claimed in any of claims 1 to 9, **characterized in that** it contains **other nonionic surfactants** preferably selected from the group consisting of alkoxylates of alkanols, end-capped alkoxylates of alkanols, alkoxylated fatty acid lower alkyl esters and amine oxides.

11. A rinse agent as claimed in claim 10, **characterized in that** it contains 0.1 to 15% by weight of **other nonionic surfactants**, expressed as active substance and based on the rinse aid.

12. A rinse agent as claimed in any of claims 1 to 11, **characterized in that** it contains **anionic surfactants** preferably selected from the group consisting of alkyl and/or alkenyl sulfates, alkyl ether sulfates, alkyl benzenesulfonate, monoglyceride (ether) sulfates and alkanesulfonates as an additional component.

13. A rinse agent as claimed in claim 12, **characterized in that** it contains 0.01 to 20% by weight of **anionic surfactants**, expressed as active substance and based on the rinse aid.

14. A rinse agent as claimed in any of claims 1 to 13, **characterized in that** it contains at least 50% by weight of water, based on the rinse agent.

15. The use of the gemini surfactants corresponding to formula (I) in claim 1 for improving wetting behaviour in rinse agents.

## Revendications

1. Produit de rinçage contenant des agents tensioactifs géminés de formule (I)
R-CHOH-CH₂-[OCH₂CH₂]x-O-CH₂-CHOH-R
dans laquelle R représente un reste alkyle et/ou alkényle linéaire ou ramifié ayant de 4 à 22 atomes de carbone et x représente un nombre allant de 5 à 90,
ainsi que des ingrédients supplémentaires usuels dans les produits de rinçage.

2. Produit selon la revendication 1, pour lequel dans la formule (I), x représente de 10 à 45, de préférence de 12 à 35.

3. Produit selon la revendication 1 et/ou 2, pour lequel dans la formule (I), R représente un reste alkyle linéaire ou ramifié ayant de 8 à 12 atomes de carbone.

4. Produit selon l'une des revendications 1 à 3, pour lequel dans la formule (I) R représente un reste alkyle linéaire ayant de 8 à 12 atomes de carbone.

5. Produit selon l'une des revendications 1 à 4,
**caractérisé en ce qu'**
il renferme au moins 80 % en poids d'agents tensioactifs géminés pour lesquels tous les groupes hydroxy libres du polyéthylèneglycol sont bloqués avec des 1,2-époxyalcanes.

6. Produit de rinçage selon les revendications 1 à 5,
**caractérisé en ce qu'**
il renferme des agents tensioactifs géminés de formule (I) dans laquelle x représente un nombre de 5 à 90, de préférence de 10 à 45, en particulier de 12 à 35, R représente un reste alkyle et/ou alkényle linéaire ou ramifié ayant de 4 à 22 atomes de carbone.

7. Produit de rinçage selon l'une des revendications 1 à 6,
**caractérisé en ce qu'**
il renferme des alkyl- et/ou alkényloligoglycosides de formule (II)
R¹O-[G]ₚ (II)
dans laquelle R¹ représente un reste alkyle et/ou alkényle ayant de 4 à 22 atomes de carbone, G représente un reste de sucre ayant 5 ou 6 atomes de carbone et p représente des nombres allant de 1 à 10.

8. Produit de rinçage selon l'une des revendications 1 à 7,
**caractérisé en ce qu'**
il renferme ― calculé en tant que substance active rapporté au produit - de 0,01 à 25 % en poids d'agents tensioactifs géminés de formule (I).

9. Produit de rinçage selon l'une des revendications 1 à 8,
**caractérisé en ce qu'**
il renferme ― calculé en tant que substance active, rapporté au produit - de 0,01 à 30 % en poids d'alkyl- et/ ou alkényloligoglycosides de formule (II).

10. Produit de rinçage selon l'une des revendications 1 à 9,
**caractérisé en ce qu'**
il renferme d'autres agents tensioactifs non ioniques, de préférence choisis dans le groupe qui est formé d'alkoxylates d'alcanols, d'alkoxylates d'alcanols aux groupes terminaux bloqués, d'esters d'alkyle inférieur d'acides gras alkoxylés et d'oxydes d'amine.

11. Produit de rinçage selon la revendication 10,
**caractérisé en ce qu'**
il renferme ― calculé en tant que substance active, rapporté au produit - de 0,1 à 15 % en poids d'autres agents tensioactifs non ioniques.

12. Produit de rinçage selon l'une des revendications 1 à 11,
**caractérisé en ce qu'**
il renferme comme autres composants des agents tensioactifs anioniques, de préférence choisis dans le groupe qui est formé des alkyl- et/ou alkénylsulfates, des alkyléthersulfates, des alkylbenzènesulfonates, des monoglycéride(éther) sulfates et des alcanesulfonates.

13. Produit de rinçage selon la revendication 12,
**caractérisé en ce qu'**
il renferme ― calculé comme substance active, rapporté au produit ― de 0,01 à 20 % d'agents tensioactifs anioniques.

14. Produit de rinçage selon l'une des revendications 1 à 13,
**caractérisé en ce qu'**
il renferme au moins 50 % en poids -, rapporté au produit - d'eau.

15. Utilisation d'agents tensioactifs géminés conformément à la formule (I) selon la revendication 1, pour l'amélioration des propriétés de mouillage dans les produits de rinçage.
